# EUROPÄISCHE PATENTANMELDUNG

(11) **EP 2 469 212 A2**
(43) Veröffentlichungstag der Anmeldung: **27.06.2012**
(21) Anmeldenummer: 11009612.0
(22) Anmeldetag: 06.12.2011
(51) Int. Cl.: F28D 20/00

(54) **Speicherbehälter**

(30) Priorität: 21.12.2010 DE 102010055450
(71) Anmelder: Linde Aktiengesellschaft, 80331 Munich (DE)
(72) Erfinder: Posselt, Heinz, Dr., 83043 Bad Aibling (DE)

(57) **Zusammenfassung**

Die Erfindung betrifft einen Speicherbehälter (S) zur Speicherung einer Flüssigkeit mit einem nach unten durch einen zumindest abschnittsweise flachen Boden (B) begrenzten Speicherraum (SP) und einer im Speicherraum (SP) angeordneten Tauchpumpe (P), über die gespeicherte Flüssigkeit aus dem Speicherbehälter (S) entnommen werden kann. Der Boden (B) des Speicherraumes weist eine Vertiefung (V) auf, in der die Tauchpumpe angeordnet ist und/oder in die ein mit der Tauchpumpe verbundenes Saugrohr hineinragt.

## Beschreibung

Die Erfindung betrifft einen Speicherbehälter zur Speicherung einer Flüssigkeit mit einem nach unten durch einen zumindest abschnittsweise flachen Boden begrenzten Speicherraum und einer im Speicherraum angeordneten Tauchpumpe, über die gespeicherte Flüssigkeit aus dem Speicherbehälter entnommen werden kann.

Speicherbehälter der gattungsgemäßen Art werden in solarthermischen Kraftwerken zur Zwischenspeicherung von Sonnenergie eingesetzt. Solarthermische Kraftwerke nutzen die Energie der Sonne zur Stromerzeugung. Über Spiegel wird die Strahlung der Sonne auf einen Absorber fokussiert und in Wärme umgewandelt, die auf ein in einem geschlossenen Kreislauf zirkulierendes Thermoöl übertragen wird. Das Thermoöl, das sich im Absorber auf eine Temperatur von ca. 400°C aufheizt, gibt einen Teil seiner Wärmeenergie über einen Wärmetauscher wieder ab, wobei überhitzter Wasserdampf erzeugt wird. Auf eine Temperatur von ca. 300°C abgekühlt, gelangt das Thermoöl schließlich zurück zum Absorber. Der überhitzte Wasserdampf wird in einer mit einem Generator gekoppelten Dampfturbine entspannt und erzeugt auf diese Weise elektrischen Strom. Um auch zu Zeiten elektrischen Strom erzeugen zu können, in denen die Sonne nicht scheint, umfasst ein solarthermisches Kraftwerk gewöhnlich einen thermischen Salzschmelze-Speicher, in dem in sonnenreichen Zeiten ein Teil der über den Absorber aufgenommenen Sonnenwärme gespeichert und aus dem in sonnenarmen bzw. sonnenlosen Zeiten Wärme zur Stromproduktion entnommen wird. Nach dem Stand der Technik weist ein solcher Wärmespeicher zwei thermisch gegen die Umgebung isolierte, voneinander getrennte Speicherbehälter auf, zwischen denen eine als Wärmeträger dienende Salzschmelze hin und her gepumpt werden kann. Zur Wärmespeicherung wird dem Speicherraum des Speicherbehälters Salzschmelze mit einer Temperatur von ca. 300°C entnommen, über einen mit dem Absorber gekoppelten Wärmetauscher auf ca. 400°C aufgeheizt und anschließend zur Zwischenspeicherung in den Speicherraum eines zweiten Speicherbehälters gepumpt. Beispielsweise in der Nacht wird aus dem zweiten Speicherbehälter Salzschmelze abgezogen, über einen mit dem Dampfkreislauf der Dampfturbine gekoppelten Wärmetauscher unter Produktion von Wasserdampf auf ca. 300°C abgekühlt und anschließend in den Speicherraum des ersten Speicherbehälters zurückgeführt.

Die Speicherbehälter von thermischen Salzschmelze-Speichern weisen typischerweise einen zylindrischen Speicherraum mit einem Durchmesser von ca. 37m und einer Höhe von ca. 14m auf, wodurch sie bis zu 28000to Salzschmelze aufnehmen können. Zur Entnahme von Salzschmelze ist im Speicherraum eine Tauchpumpe so angeordnet, dass sich ihre Ansaugöffnung oberhalb des flachen Speicherraumbodens befindet. Um u. a. zu gewährleisten, dass die Tauchpumpe während des Betriebs des thermischen Salzschmelze-Speichers keine Luft ansaugt, wird der Spiegel der Salzschmelze lediglich bis zu einer Mindesthöhe abgesenkt, die bei ca. 1 m liegt. In den beiden Speicherbehältern verbleibt daher stets eine Mindestmenge von ca. 4000to Salzschmelze, die nicht für die Wärmespeicherung genutzt werden kann, für die jedoch Investitionskosten in der Größenordnung von mehreren Mio. Euro anfallen.

Aufgabe der Erfindung ist es, einen Speicherbehälter der eingangs beschriebenen Art anzugeben, durch den die Nachteile des Standes überwunden werden.

Diese Aufgabe wird dadurch gelöst, dass der Boden des Speicherraumes eine Vertiefung aufweist, in der die Tauchpumpe angeordnet ist und/oder in die ein mit der Tauchpumpe verbundenes Saugrohr hineinragt.

Die Vertiefung ist so gestaltet, dass gespeicherte Flüssigkeit bei ihrer Entnahme mit vernachlässigbarem Druckverlust der Ansaugöffnung der Tauchpumpe bzw. dem stromabwärts gelegenen Ende des Tauchrohres zuströmen kann.

Vorzugsweise befinden sich die Ansaugöffnung der Tauchpumpe und/oder das stromaufwärts gelegene Ende des Saugrohres vollständig innerhalb der Vertiefung. Besonders bevorzugt sind sie so tief angeordnet, dass die gespeicherte Flüssigkeit zumindest bis auf das freie Volumen der Vertiefung abgezogen werden kann, ohne dass die Gefahr des Luftansaugens durch die Tauchpumpe besteht. Dabei ist unter dem freien Volumen der Rauminhalt der Vertiefung abzüglich der Volumina von in der Vertiefung angeordneter Einbauten, wie beispielsweise der Tauchpumpe, zu verstehen.

Der erfindungsgemäße Speicherbehälter kann mit einem ungeteilten Speicherraum ausgeführt sein. Eine Variante der Erfindung sieht allerdings vor, dass der Speicherbehälter von einem Typ ist, wie er in einer unter der Nummer 102010034294.7 beim Deutschen Patent- und Markenamt eingereichten Patentanmeldung offenbart wird, und der daher ein bewegliches Trennelement aufweist, mit dem der Speicherraum in einen oberen und einen unteren Teilraum getrennt werden kann.

Aus einem erfindungsgemäßen Speicherbehälter kann die im Speicherraum gespeicherte Flüssigkeit bis auf einen Rest, der etwa der Füllmenge der Vertiefung entspricht, entnommen werden. Insbesondere dann, wenn der Speicherbehälter im thermischen Salzschmelze-Speicher eines solarthermischen Kraftwerks eingesetzt wird, ergeben sich beträchtliche finanzielle Vorteile gegenüber dem Stand der Technik, da mit einer erheblich geringeren Menge an Salzschmelze dieselbe Wärmemenge gespeichert werden kann.

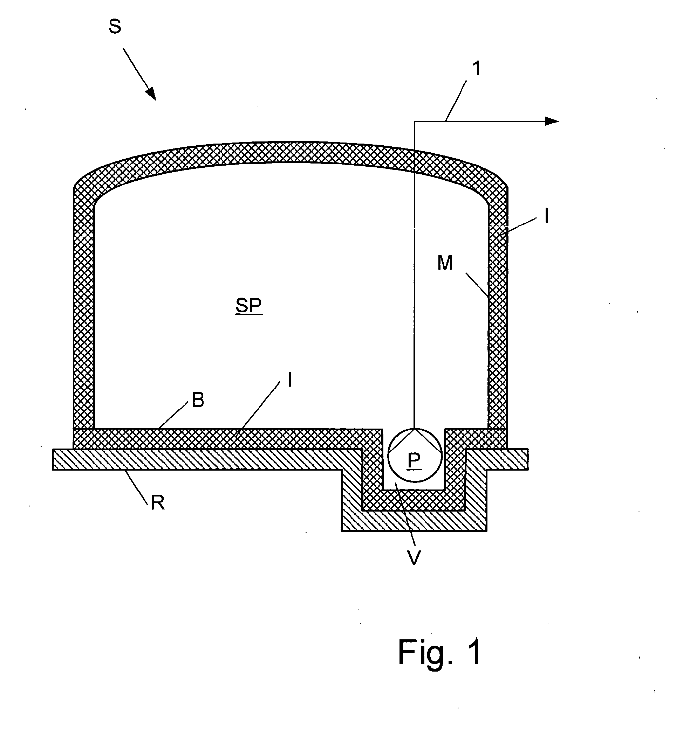

Im Folgenden soll die Erfindung anhand eines in der Figur 1 schematisch dargestellten Ausführungsbeispiels näher erläutert werden.

Die Figur 1 zeigt einen Schnitt durch einen erfindungsgemäßen Speicherbehälter, wie er beispielsweise im thermischen Salzschmelze-Speicher eines solarthermischen Kraftwerks eingesetzt werden kann.

Der Speicherbehälter S umfasst einen im Wesentlichen als senkrecht stehender Zylinder ausgeführten Mantel M, der mit einer Bodenplatte B flüssigkeitsdicht verbunden ist. Mantel M und Bodenplatte B sind mit einer wärmeisolierenden Schicht I umgeben und umschließen einen Speicherraum SP, in dem ein flüssiger Wärmeträger, wie z. B. eine Salzschmelze, gespeichert werden kann. Diese Konstruktion steht auf einem aus Beton gegossenen Fundament R. Der Speicherraum SP wird nach unten durch die Bodenplatte B begrenzt, die seinen Boden bildet und bis auf die Vertiefung V flach ist. In der Vertiefung V ist die Tauchpumpe P so angeordnet ist, dass ihre Ansaugöffnung sich vollständig innerhalb der Vertiefung V befindet. Von der Tauchpumpe P führt eine Rohrleitung 1 nach außen, über die der flüssige Wärmeträger einem Wärmetauscher (nicht dargestellt) zugeführt werden kann.

## Patentansprüche

1. Speicherbehälter zur Speicherung einer Flüssigkeit mit einem nach unten durch einen zumindest abschnittsweise flachen Boden begrenzten Speicherraum und einer im Speicherraum angeordneten Tauchpumpe, über die gespeicherte Flüssigkeit aus dem Speicherbehälter entnommen werden kann, **dadurch gekennzeichnet, dass** der Boden des Speicherraumes eine Vertiefung aufweist, in der die Tauchpumpe angeordnet ist und/oder in die ein mit der Tauchpumpe verbundenes Saugrohr hineinragt.

2. Speicherbehälter nach Anspruch 1, **dadurch gekennzeichnet, dass** die Ansaugöffnung der Tauchpumpe und/oder das stromaufwärts gelegene Ende des Saugrohres vollständig in der Vertiefung liegt.

3. Speicherbehälter nach einem der Ansprüche 1 oder 2, **dadurch gekennzeichnet, dass** er ein bewegliches Trennelement aufweist, mit dem der Speicherraum in einen oberen und einen unteren Teilraum getrennt werden kann.
